# EUROPEAN PATENT APPLICATION

(11) **EP 3 943 183 A1**
(43) Date of publication of application: **26.01.2022**
(21) Application number: 20773787.5
(22) Date of filing: 04.03.2020
(51) Int. Cl.: B01F 3/04, B01F 5/06, C02F 1/32, C02F 1/72

(54) **BUBBLE GENERATION DEVICE**

(30) Priority: 19.03.2019 JP 2019050879
(71) Applicant: Murata Manufacturing Co., Ltd., Nagaokakyo-shi, Kyoto 617-8555 (JP)
(72) Inventor: FUJIMOTO, Katsumi, Nagaokakyo-shi, Kyoto 617-8555 (JP); KOGI, Yoshihiro, Nagaokakyo-shi, Kyoto 617-8555 (JP)
(74) Representative: Reeve, Nicholas Edward
(86) International application number: PCT/JP2020/009071
(87) International publication number: WO 2020/189271

(57) **Abstract**

A bubble generator according to the present disclosure generates micro bubbles (200) in a liquid by vibration. The bubble generator (1a) includes a diaphragm (2), a piezoelectric device (4A), and a light source (5). The diaphragm (2) has multiple micro apertures (2b) formed therethrough and has one surface to be in contact with the water (liquid) in the water tank (10) and the other surface to be in contact with the gas. The diaphragm (2) transmits ultraviolet light. The piezoelectric device (4A) vibrates the diaphragm (2). The light source (5) emits ultraviolet light to the water in the water tank (10) from a side region of the diaphragm (2) near the other surface.

## Description

### Technical Field

The present disclosure relates to a bubble generator.

### Background Art

In recent years, micro bubbles have been used in various fields, for example, in water purification, wastewater treatment, or fish raising. Bubble generators to generate micro bubbles have been developed (e.g., Patent Document 1).

A bubble generator described in Patent Document 1 utilizes a piezoelectric device to generate micro bubbles. A bubble generator described in Patent Document 2 includes a gas introducing section in which ozone is generated by irradiation of deep ultraviolet light and introduced into a liquid. The introduction of ozone generates micro bubbles.

### Citation List

### Patent Document

Patent Document 1: Japanese Patent No. 6108526
Patent Document 2: Japanese Unexamined Patent Application Publication No. 2018-094543

### Summary of Invention

### Technical Problem

In the case of generating micro bubbles containing ozone as is in Patent Document 2, it is necessary to provide the bubble generator with the gas introducing section capable of deep ultraviolet irradiation. This may lead to a problem that the size of the bubble generator increases. Moreover, providing the gas introducing section with an ability of the deep ultraviolet irradiation leads to an increase in the cost of the bubble generator.

Accordingly, an object of the present disclosure is to provide a compact and low-cost bubble generator that can generate micro bubbles containing ozone.

### Solution to Problem

A bubble generator according to an embodiment of the present disclosure generates micro bubbles in a liquid by vibration. The bubble generator includes a diaphragm through which multiple cavities are formed and that has one surface to be in contact with the liquid in a liquid tank and the other surface to be in contact with a gas. The diaphragm transmits ultraviolet light. The bubble generator also includes a piezoelectric device that vibrates the diaphragm and a light source that emits the ultraviolet light to the liquid in the liquid tank from a side region of the diaphragm near the other surface.

### Advantageous Effects of Invention

The bubble generator of the present disclosure is configured to emit ultraviolet light to the liquid of the liquid tank from the other side region of the diaphragm that transmits ultraviolet light. With this configuration, the cost and the size of the bubble generator that can generate micro bubbles containing ozone can be reduced.

### Brief Description of Drawings

[Fig. 1] Fig. 1 is a schematic view illustrating a water purifier in which a bubble generator according to Embodiment 1 is used.
[Fig. 2] Fig. 2 is a perspective view illustrating the bubble generator according to Embodiment 1.
[Fig. 3] Fig. 3 is a cross-sectional view illustrating a half section of the bubble generator according to Embodiment 1.
[Fig. 4] Fig. 4 is a plan view illustrating a diaphragm according to Embodiment 1.
[Fig. 5] Fig. 5 is a cross-sectional view illustrating a cavity formed through the diaphragm according to Embodiment 1.
[Fig. 6] Fig. 6 is a schematic view illustrating a water purifier in which a bubble generator according to Embodiment 2 is used.

### Description of Embodiment

A bubble generator according to the present embodiment will be described in detail with reference to the drawings. Note that the same or equivalent elements will be denoted by the same reference signs and the description will not be repeated.

### Embodiment 1

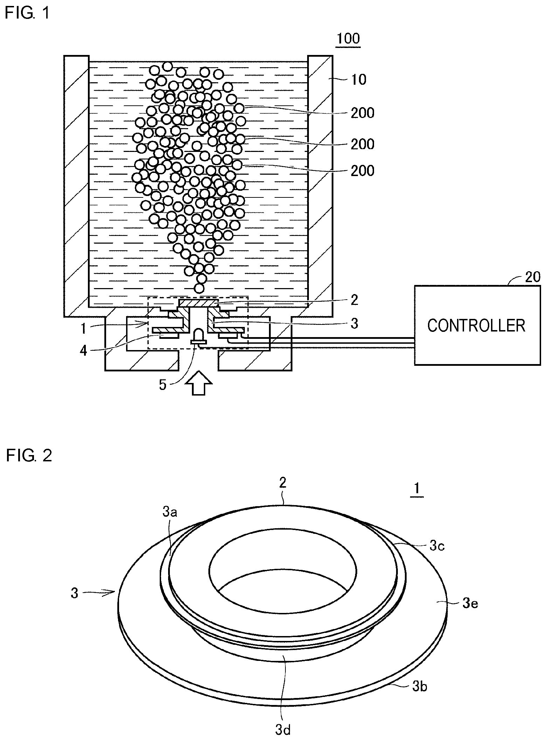

Fig. 1 is a schematic view illustrating a water purifier 100 in which a bubble generator 1 according to Embodiment 1 is used. For example, the bubble generator 1 of Fig. 1 is used in the water purifier 100 for generating micro bubbles 200 in the water in a water tank (liquid tank) 10. The bubble generator 1 is installed at the bottom of the water tank 10. The application of the bubble generator 1 is not limited to the water purifier 100. The bubble generator 1 may be applied to various apparatuses, such as wastewater treatment apparatuses or fish-raising water tanks.

The bubble generator 1 includes a diaphragm 2, a tubular member 3, and a piezoelectric device 4, and a light source 5. The bubble generator 1 is configured such that the diaphragm 2 is disposed at a hole formed in a portion of the bottom of the water tank 10 and the piezoelectric device 4 vibrates the diaphragm 2 via the tubular member 3. Micro bubbles 200 are thereby generated at multiple micro apertures (cavities) formed through the diaphragm 2.

For example, the diaphragm 2 is formed of a glass plate that can transmit ultraviolet and deep ultraviolet light having a wavelength of, for example, 200 nm to 380 nm. For example, the glass plate is made of silica glass or of synthetic silica glass of which the composition is controlled so as to improve transmission of deep ultraviolet light. Note that the material of the diaphragm 2 is not limited to glass but may be made of other material (for example, a resin) that can transmit ultraviolet light.

The diaphragm 2 has multiple micro apertures formed therethrough. One surface of the diaphragm 2 is in contact with the water (a liquid) in the water tank 10, whereas the other surface is in contact with air (a gas). In other words, in the bubble generator 1, the water and the air are partitioned from each other with the diaphragm 2. When back pressure is applied to the other surface of the diaphragm 2 (in a direction indicated by the arrow in Fig. 1) and the diaphragm 2 is vibrated, micro bubbles 200 are generated in the water in the water tank 10 by the air supplied through the micro apertures.

The light source 5 can emit ultraviolet light to the water in the water tank 10 from the side region of the diaphragm 2 near the other surface. The light source 5 is a light source, such as an LED or a mercury lamp, that emits ultraviolet light or deep ultraviolet light. The light source 5 is configured to ozonize oxygen supplied through the micro apertures into the water in the water tank 10 due to the light source 5 emitting ultraviolet light or deep ultraviolet light to the water in the water tank 10. Micro bubbles 200 that contain ozonized oxygen have a disinfectant effect.

Part of ultraviolet light or deep ultraviolet light emitted to the water of the water tank 10 is used to ozonize oxygen supplied into the water, and part of it is reflected by the surfaces of the micro bubbles 200 and scattered in the water. In the case of the light source 5 emitting 230 nm ultraviolet light, the ultraviolet light can destroy DNA of bacteria completely. In the bubble generator 1, a back pressure (for example, in an approximate range of 0.08 to 0.12 atm or 8 to 12 kPa) is applied to the surface of the diaphragm 2 being opposite to the surface in contact with the water (liquid) of the water tank 10. Simultaneously, the light source 5 emits light having a wavelength range of ultraviolet light or deep ultraviolet light. Thus, the water can be sterilized due to both ozone generation and ultraviolet irradiation.

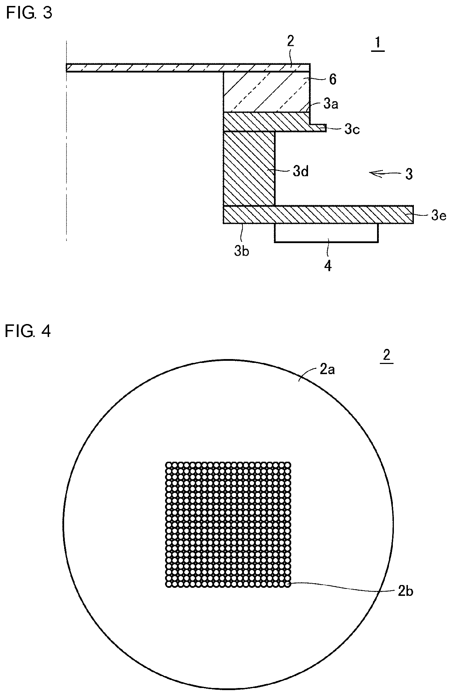

In the bubble generator 1, the piezoelectric device 4 causes the diaphragm 2 to vibrate using the tubular member 3 interposed therebetween. Fig. 2 is a perspective view illustrating the bubble generator 1 according to Embodiment 1. Fig. 3 is a cross-sectional view illustrating a half section of the bubble generator according to Embodiment 1. Note that in Fig. 3, the dash-dot line passes through the central axis of the tubular member 3.

The tubular member 3 is connected to the diaphragm 2. The tubular member 3 is shaped like a tube. The tubular member 3 has a first end portion 3a and a second end portion 3b that is opposite to the first end portion 3a. The second end portion 3b is positioned opposite to the first end portion 3a in the axial direction of the tubular member.

The first end portion 3a is connected to the diaphragm 2. In other words, the first end portion 3a of the tubular member 3 is fixed to the surface of the diaphragm 2 on the side closer to the tubular member 3 in such a manner that the diaphragm 2 closes the opening at the first end portion 3a of the tubular member 3.

In the present embodiment, the tubular member 3 is made of stainless steel. The tubular member 3 may be made of other material. It is preferable that the tubular member 3 be made of a metal having rigidity, such as stainless steel.

The tubular member 3 has a flange 3c disposed so as to extend radially outward from the side surface of the tubular member 3. For example, as illustrated in Fig. 1, the flange 3c is connected to the hole of the water tank 10 formed at a portion of the bottom thereof. The first end portion 3a of the tubular member 3 is thereby joined to the water tank 10. When the piezoelectric device 4 causes the diaphragm 2 to vibrate using the tubular member 3 interposed therebetween, the flange 3c does not vibrate much. Accordingly, the piezoelectric device 4 can vibrate only the diaphragm 2 without transmitting vibrations from the piezoelectric device 4 to the water tank 10.

A ring-shaped collar 3e is disposed at the second end portion 3b of the tubular member 3 so as to extend radially outward. The ring-shaped collar 3e is shaped like a doughnut as viewed in plan. A portion between the flange 3c and the ring-shaped collar 3e is a tubular body 3d. The outside diameter of the ring-shaped collar 3e is set to be larger than the outside diameter of the tubular body 3d. As illustrated in Fig. 3, the outside diameter of the tubular body 3d is smaller than the outside diameter of the diaphragm 2 in the present embodiment, although this does not specifically limit the scope of the invention.

The ring-shaped collar 3e and the tubular body 3d may be formed of the same material as a single component. In the present embodiment, however, the ring-shaped collar 3e and the tubular body 3d are separate members, and the ring-shaped collar 3e is joined to the end surface of the tubular body 3d that is positioned opposite to the diaphragm 2. Accordingly, the ring-shaped collar 3e may be made as a different member from the tubular body 3d.

A ring-shaped piezoelectric device 4 is fixed to the surface of the ring-shaped collar 3e that is opposite to the surface closer to the diaphragm 2. The ring-shaped piezoelectric device 4 has a ring-shaped piezoelectric member and electrodes disposed on respective opposite surfaces of the ring-shaped piezoelectric member. The ring-shaped piezoelectric member is polarized in the thickness direction, in other words, in the direction in which the first end portion 3a and the second end portion 3b of the tubular member 3 oppose each other. The ring-shaped piezoelectric member is made of a piezoelectric substance, such as piezoelectric ceramics.

The ring-shaped collar 3e and the ring-shaped piezoelectric device 4 fixed thereto form a vibrator that causes the diaphragm 2 to vibrate flexurally. For example, the ring-shaped piezoelectric device 4 has an inside diameter of 12 mm, an outside diameter of 18 mm, and a thickness of 1 mm. The piezoelectric device 4 is driven by rectangular waves with a voltage of 50 Vpp to 70 Vpp and a duty ratio of 50%.

In the bubble generator 1, the flexural vibration of the piezoelectric device 4 is transmitted to the diaphragm 2 through the tubular member 3, and the vibration of the diaphragm 2 generates the micro bubbles 200. A controller 20 supplies a signal to the electrodes of the piezoelectric device 4, thereby driving the piezoelectric device 4. The controller 20 also supplies a signal to the light source 5, thereby driving the light source 5.

Note that the piezoelectric device 4 is not limited to the above-described structure having the ring-shaped piezoelectric member and the electrodes disposed on respective opposite surfaces thereof. The piezoelectric device 4 may be formed, for example, by disposing multiple piezoelectric members so as to form a ring-like shape and by disposing the electrodes on both surfaces of each piezoelectric member.

As illustrated in Fig. 3, the diaphragm 2 is connected to the first end portion 3a of the tubular member 3 with a support glass member 6 interposed therebetween. For example, when the thickness of the diaphragm 2 is 0.2 mm, the thickness of the support glass member 6 may be 1.1 mm. The diaphragm 2 may be directly connected to the first end portion 3a of the tubular member 3 without having the support glass member 6 therebetween.

The bubble generator 1 is configured such that the diaphragm 2 being in contact with the liquid is formed of the glass plate and the piezoelectric device 4 vibrates the diaphragm 2 via the tubular member 3. This enables a space for introducing the gas to be completely isolated from the liquid. Complete isolation between the liquid and the space for introducing the gas can prevent electric wiring or the like of the piezoelectric device 4 from coming into contact with the liquid. In addition, in the bubble generator 1, the light source 5 can be disposed in the space for introducing the gas, which also prevents electric wiring or the like of the light source 5 from coming into contact with the liquid.

Multiple micro apertures are formed through the diaphragm 2. Fig. 4 is a plan view illustrating the diaphragm according to Embodiment 1. The diaphragm 2 of Fig. 4 is formed of a glass plate 2a of 14 mm in diameter in which multiple micro apertures 2b are formed in a 5 mm by 5 mm region at a central portion thereof. For example, when the diameter of each micro aperture 2b is set to be 10 µm and the spacing between adjacent micro apertures 2b is set to be 0.25 mm, four hundred and forty one micro apertures 2b can be formed in the 5 mm by 5 mm region of the diaphragm 2. Note that in Fig. 4, the diameter and the spacing of the micro apertures 2b are illustrated differently from actual apertures to give a picture of many micro apertures 2b being formed in the glass plate 2a.

The diameter of each micro aperture 2b formed in the diaphragm 2 is 1 µm to 20 µm when measured at the opening of the aperture that comes into contact with the liquid. Introducing air through the micro apertures 2b generates micro bubbles 200 in the water in the water tank 10. An approximate diameter of each micro bubble 200 is 10 times larger than the aperture diameter. The micro apertures 2b are arrayed at a spacing of 10 times or more larger than the aperture diameter, which prevents micro bubbles 200 generated at one micro aperture 2b from merging other micro bubbles 200 generated at adjacent micro apertures 2b. This improves performance of generating discrete micro bubbles 200.

For example, the micro apertures 2b can be formed through the glass plate 2a using a method in which laser irradiation and liquid-phase etching are combined. More specifically, the glass plate 2a is irradiated with laser beams, and the laser energy denatures the composition of the glass plate 2a. The denatured portion is etched with a liquid fluoride-based etching material to form the micro aperture 2b.

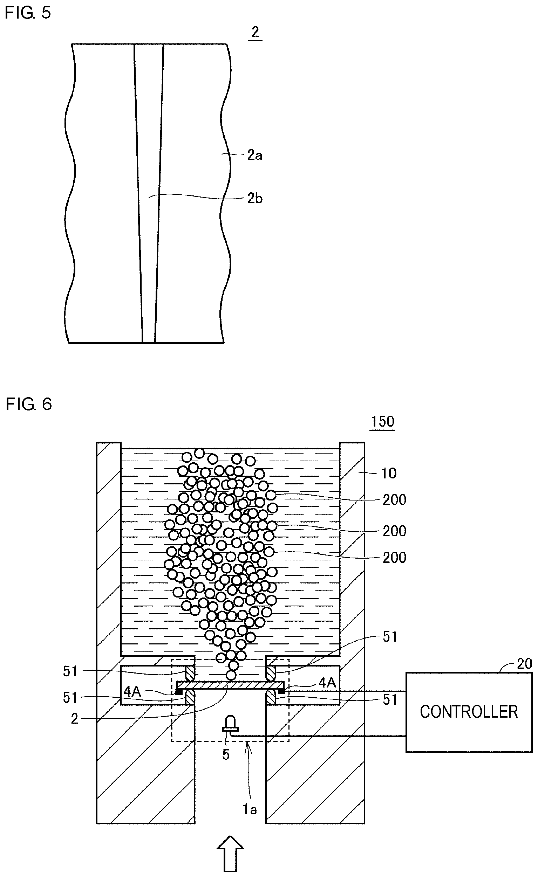

Fig. 5 is a cross-sectional view illustrating a micro aperture (cavity) 2b formed through the diaphragm according to Embodiment 1. As illustrated in Fig. 5, the micro aperture 2b formed through the glass plate 2a has a tapered shape in which the aperture diameter at the upper surface in the figure is larger than that at the lower surface. The diaphragm 2 is disposed such that the surface with the smaller diameter apertures is in contact with the water in the water tank 10 and the surface with the larger diameter apertures is in contact with the gas, which can further reduce the diameter of each micro bubble 200 generated at the micro aperture 2b. The diaphragm 2 may be disposed oppositely, in other words, the surface with the larger diameter apertures may be in contact with the water in the water tank 10 and the surface with the smaller diameter apertures may be in contact with the gas.

Forming the diaphragm 2 using the glass plate 2a is advantageous compared with a diaphragm formed of a metal plate in that the glass plate 2a can prevent liquid contamination from occurring due to metal ions being leached into the liquid. Moreover, in the case of micro apertures being formed in the metal plate, it is necessary to perform plating to prevent corrosion. It is also necessary to perform plating using a precious metal to prevent leaching of metal ions into the liquid. Precious metal plating on the metal plate having micro apertures increases the cost of the diaphragm.

As described above, the bubble generator 1 according to Embodiment 1 generates micro bubbles 200 in the liquid by vibration. The bubble generator 1 includes the diaphragm 2, the piezoelectric device 4, and the light source 5. The diaphragm 2 has the multiple micro apertures 2b formed therethrough and has the one surface to be in contact with the water (liquid) in the water tank 10 and the other surface to be in contact with the gas. The diaphragm 2 transmits ultraviolet light. The piezoelectric device 4 vibrates the diaphragm 2. The light source 5 emits ultraviolet light to the water (liquid) in the water tank 10 from the side region of the diaphragm 2 near the other surface.

Accordingly, the bubble generator 1 is configured to emit ultraviolet light to the water (liquid) of the water tank (10) from the other side region of the diaphragm 2 that transmits ultraviolet light. With this configuration, the cost and the size of the bubble generator that can generate micro bubbles containing ozone can be reduced.

The diaphragm 2 may be formed of the glass plate. Accordingly, the bubble generator 1 can prevent liquid contamination due to metal ions being leached into the water (liquid) in the water tank 10.

The glass plate 2a may be made of a material that transmits ultraviolet light having a wavelength of 200 nm to 380 nm. Accordingly, the bubble generator 1 has a high disinfectant effect due to sterilization by ozone contained in the micro bubbles 200 generated by vibration as well as due to sterilization of the water in the water tank 10 by ultraviolet irradiation.

The diaphragm 2 may have micro apertures 2b each of which has a diameter of 1 µm to 20 µm measured at the surface to be in contact with the liquid and that are formed through the diaphragm 2 with a spacing between adjacent micro apertures 2b being 10 times larger than the diameter. With this configuration, the bubble generator 1 can prevent micro bubbles 200 generated at one micro aperture 2b from merging other micro bubbles 200 generated at adjacent micro apertures 2b, which enables discrete micro bubbles 200 to be generated.

Moreover, each micro aperture 2b has the tapered shape in which the diameter of the micro aperture 2b at the one surface to be in contact with the water (liquid) in the water tank 10 is smaller than the diameter of the micro aperture 2b at the other surface to be in contact with the gas. This enables the bubble generator 1 to further reduce the diameter of each micro bubble 200 generated at the micro aperture 2b.

The bubble generator 1 may further include the tubular member 3 that has the first end portion 3a and the second end portion 3b positioned opposite to the first end portion 3a. The tubular member 3 is connected to the diaphragm 2 at the first end portion 3a so as to support the diaphragm 2. In this case, the piezoelectric device 4 is fixed to the ring-shaped collar 3e that extends radially outward from the tubular member 3 at a position near the second end portion 3b of the tubular member 3, and the piezoelectric device 4 vibrates the tubular member 3. In addition, the first end portion 3a of the tubular member 3 is joined to the water tank 10.

Accordingly, the bubble generator 1 can completely separate the liquid and the space for introducing the gas from each other, which can thereby prevent electric wiring or the like of the piezoelectric device 4 from coming into contact with the liquid.

In addition, the ring-shaped collar 3e has the first surface positioned closer to the diaphragm 2 and the second surface positioned opposite to the first surface, and the piezoelectric device 4 is fixed to the second surface. Accordingly, the bubble generator 1 can prevent the piezoelectric device 4 from coming into contact with the liquid.

In addition, the tubular member 3 may have the flange 3c formed at the first end portion, and the tubular member 3 may be joined to the water tank 10 with the flange 3c interposed therebetween. Accordingly, the bubble generator 1 can vibrate only the diaphragm 2 without transmitting vibrations from the piezoelectric device 4 to the water tank 10.

Moreover, the flange 3c, the tubular member 3, and the ring-shaped collar 3e may be integrally formed of the same material. This can increase the strength of the flange 3c, the tubular member 3, and the ring-shaped collar 3e.

### Embodiment 2

The bubble generator 1 according to Embodiment 1 has been described as having a structure in which the piezoelectric device 4 vibrates the diaphragm 2 via the tubular member 3. The structure in which the piezoelectric device vibrates the diaphragm, however, is not limited to this. The structure in which the piezoelectric device vibrates the diaphragm may be different insofar as the bubble generator is configured to emit ultraviolet light to the water (liquid) in the water tank from the other side region of the diaphragm that can transmit the ultraviolet light. A bubble generator according to Embodiment 2 is configured such that the piezoelectric device directly vibrates the diaphragm, which is described further below.

Fig. 6 is a schematic view illustrating a water purifier 150 in which a bubble generator 1a according to Embodiment 2 is used. Note that in the bubble generator 1a illustrated in Fig. 6, the same components as those described for the bubble generator 1a illustrated in Figs. 1 to 5 are denoted by the same reference sings, and duplicated descriptions will be omitted.

For example, the bubble generator 1a of Fig. 6 is used in the water purifier 150 for generating micro bubbles 200 in the water in the water tank (liquid tank) 10. The bubble generator 1a is installed at the bottom of the water tank 10. Note that the application of the bubble generator 1a is not limited to the water purifier 150. The bubble generator 1a may be applied to various apparatuses, such as wastewater treatment apparatuses or fish-raising water tanks.

The bubble generator 1a includes the diaphragm 2, a piezoelectric device 4A, and the light source 5. The bubble generator 1a is configured such that the diaphragm 2 is disposed at a hole formed in a portion of the bottom of the water tank 10 and the end portion of the diaphragm 2 is fixed by rubber seals 51. In the bubble generator 1a, a rubber seal 51 disposed on the surface of the diaphragm 2 that comes into contact with the water (liquid) of the water tank 10 can completely isolate the liquid and the space for introducing the gas from each other.

The piezoelectric device 4A is directly attached to an end portion of the diaphragm 2 and can directly vibrate the diaphragm 2. The diaphragm 2 is fixed by elastic rubber seals 51 and can be vibrated by the piezoelectric device 4A disposed at the end portion of the diaphragm 2.

In the bubble generator 1a, the light source 5 can emit ultraviolet light to the water in the water tank 10 from the side region of the diaphragm 2 near the surface being in contact with air (a gas). Accordingly, in the bubble generator 1a, a back pressure (for example, in an approximate range of 0.08 to 0.12 atm or 8 to 12 kPa) is also applied to the surface of the diaphragm 2 being opposite to the surface in contact with the water (liquid) of the water tank 10. Simultaneously, the light source 5 emits light having a wavelength range of ultraviolet light or deep ultraviolet light. Thus, the water can be sterilized due to both ozone generation and ultraviolet irradiation.

As described above, the bubble generator 1a according to Embodiment 2 generates micro bubbles 200 in the liquid by vibration. The bubble generator 1a includes the diaphragm 2, the piezoelectric device 4A, and the light source 5. The diaphragm 2 has the multiple micro apertures 2b formed therethrough and has the one surface to be in contact with the water (liquid) in the water tank 10 and the other surface to be in contact with the gas. The diaphragm 2 transmits ultraviolet light. The piezoelectric device 4A vibrates the diaphragm 2. The light source 5 emits ultraviolet light to the water (liquid) in the water tank 10 from the side of the diaphragm 2 near the other surface.

Accordingly, the bubble generator 1 is configured to emit ultraviolet light to the water (liquid) of the water tank (10) from the other side region of the diaphragm 2 that transmits ultraviolet light. With this configuration, the cost and the size of the bubble generator that can generate micro bubbles containing ozone can be reduced.

The embodiments disclosed herein are construed, in all respects, not as limiting but as examples. It is intended that the scope of the present invention be set forth not in the above descriptions but in the claims in which all the modifications and alterations within the scope of the claims as well as the equivalents thereof are included.

### Reference Signs List

- 1, 1a: bubble generator
- 2: diaphragm
- 2a: glass plate
- 2b: micro aperture
- 3: tubular member
- 3a: first end portion
- 3b: second end portion
- 3c: flange
- 3d: tubular body
- 3e: ring-shaped collar
- 4, 4A: piezoelectric device
- 5: light source
- 6: support glass member
- 10: water tank
- 20: controller
- 51: rubber seal
- 100, 150: water purifier
- 200: bubble

## Claims

1. A bubble generator that generates micro bubbles in a liquid by vibration, the bubble generator comprising:
a diaphragm through which multiple cavities are formed and that has one surface to be in contact with the liquid in a liquid tank and the other surface to be in contact with a gas, and the diaphragm transmits ultraviolet light;
a piezoelectric device that vibrates the diaphragm; and
a light source that emits the ultraviolet light to the liquid in the liquid tank from a side region of the diaphragm near the other surface.

2. The bubble generator according to Claim 1, wherein
the diaphragm is formed of a glass plate.

3. The bubble generator according to Claim 2, wherein
the glass plate is made of a material that transmits ultraviolet light having a wavelength of 200 nm to 380 nm.

4. The bubble generator according to any one of Claims 1 to 3, wherein
each one of the cavities of the diaphragm has a diameter of 1 µm to 20 µm measured at the surface of the diaphragm to be in contact with the liquid, and
the cavities are formed with a spacing between adjacent cavities being 10 times greater than the diameter.

5. The bubble generator according to any one of Claims 1 to 4, wherein
each one of the cavities has a tapered shape in which a diameter of the cavity at the one surface to be in contact with the liquid in the liquid tank is smaller than a diameter of the cavity at the other surface to be in contact with the gas.

6. The bubble generator according to any one of Claims 1 to 5, further comprising:
a tubular member that has a first end portion and a second end portion positioned opposite to the first end portion and that is connected to the diaphragm at the first end portion so as to support the diaphragm, wherein
the piezoelectric device is fixed to a ring-shaped collar extending radially outward from the tubular member at a position near the second end portion of the tubular member, and the piezoelectric device vibrates the tubular member, and
the first end portion of the tubular member is joined to the liquid tank.

7. The bubble generator according to Claim 6, wherein
the ring-shaped collar has a first surface positioned closer to the diaphragm and a second surface positioned opposite to the first surface, and
the piezoelectric device is fixed to the second surface.

8. The bubble generator according to Claim 6 or 7, wherein
the tubular member has a flange formed at the first end portion, and
the tubular member is joined to the liquid tank with the flange interposed therebetween.

9. The bubble generator according to Claim 8, wherein the flange, the tubular member, and the ring-shaped collar are integrally formed of the same material.
